(19) **Europäisches Patentamt / European Patent Office / Office européen des brevets**

(11) **EP 3 806 388 B1**

(12) **EUROPÄISCHE PATENTSCHRIFT**

(45) Veröffentlichungstag und Bekanntmachung des Hinweises auf die Patenterteilung:
**11.09.2024 Patentblatt 2024/37**

(21) Anmeldenummer: **19202759.7**

(22) Anmeldetag: **11.10.2019**

(51) Internationale Patentklassifikation (IPC):
**H04L 41/147** (2022.01)   **H04L 43/0888** (2022.01)
**H04L 41/16** (2022.01)

(52) Gemeinsame Patentklassifikation (CPC):
**H04L 43/0888; H04L 41/147; H04L 41/16**

(54) **VERFAHREN UND SYSTEM ZUR VORHERSAGE VON NETZWERK DURCHSÄTZEN FÜR EIN NUTZERENDGERÄT FÜR VORBESTIMMTE GEO-KOORDINATEN UND EINEN VORBESTIMMTEN ZEITPUNKT**

METHOD AND SYSTEM FOR PREDICTING NETWORK THROUGHPUT FOR A USER TERMINAL FOR PREDETERMINED GEO-COORDINATES AND A PREDETERMINED TIME

MÉTHODE ET SYSTÈME DE PRÉVISION DES DÉBITS RÉSEAU POUR UN TERMINAL UTILISATEUR POUR LES GÉOMARCIAGES PRÉDÉTERMINÉS ET UN TEMPS PRÉDÉTERMINÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.04.2021 Patentblatt 2021/15**

(73) Patentinhaber: **Deutsche Telekom AG**
**53113 Bonn (DE)**

(72) Erfinder:
- **SCHNEIDER, Michael**
  **64367 Mühltal (DE)**
- **MOUSSELLY-SERGIEH, Hatem**
  **64283 Darmstadt (DE)**
- **VILLA ARENAS, Luis Felipe**
  **64285 Darmstadt (DE)**

(74) Vertreter: **Vossius & Partner**
**Patentanwälte Rechtsanwälte mbB**
**Siebertstrasse 3**
**81675 München (DE)**

(56) Entgegenhaltungen:
**EP-A1- 2 188 916**   **EP-B1- 2 188 916**
**US-A1- 2018 139 261**

- **SAMBA ALASSANE ET AL: "Predicting file downloading time in cellular network: Large-Scale analysis of machine learning approaches", COMPUTER NETWORKS, ELSEVIER, AMSTERDAM, NL, vol. 145, 8 September 2018 (2018-09-08), pages 243 - 254, XP085501799, ISSN: 1389-1286, DOI: 10.1016/J.COMNET.2018.09.002**
- **CHANG KWANGROK ET AL: "Estimation of network load and downlink throughput using RF scanner data for LTE networks", 2017 INTERNATIONAL SYMPOSIUM ON PERFORMANCE EVALUATION OF COMPUTER AND TELECOMMUNICATION SYSTEMS (SPECTS), THE SOCIETY FOR MODELLING AND SIMULATION INTERNATIONAL, 9 July 2017 (2017-07-09), pages 1 - 8, XP033154901, DOI: 10.23919/SPECTS.2017.8046779**

**Beschreibung**

Die Erfindung betrifft das Gebiet der mobilen Telekommunikationsnetzwerke. Insbesondere ein Verfahren, ein System und ein Computerprogramm zur Vorhersage von Netzwerk Durchsätzen für ein Nutzerendgerät für vorbestimmte Geo-Koordinaten und einen vorbestimmten Zeitpunkt basierend auf Machine Learning, ML.

Eine Schätzung des von Download-, DL, und Upload-, UL,- Netzwerk-Durchsätzen in einem Telekommunikationsnetzwerk, vorzugsweise einem LTE-Netzwerk, ist für den Betrieb und die Planung von Telekommunikationsnetzwerken von größer Bedeutung. Beispielsweise erlaubt eine genaue Vorhersage der Netzwerk-Durchsätze eine Planung der Netzwerk-Ressourcen in Bezug auf bestimmte Anwendungsanforderungen, zum anderen erlaubt eine genaue Vorhersage einen störungsfreien Betrieb von netzwerkbasierten Applikationen auf Nutzerendgeräten.

Samba, et al. "Predicting file downloading time in cellular network: Large-Scale analysis of machine learning approaches", Computer Networks, Volume 145, 9 November 2018, Seiten 243 bis 254; betrifft mehrere große Messkampangen, an denen eine Gruppe von Benutzern beteiligt war, die an ein Produktionsnetz in Frankreich angeschlossen sind, um festzustellen, ob es möglich ist, die erreichbare Datenrate anhand von Messungen vorherzusagen, die vor der Herstellung der Verbindung gesammelt wurden.

EP 2 188 916 A1 betrifft ein Verfahren zur Erzeugung eines Kanalqualitätsindikators (CQI) in einem Telekommunikationsnetzwerk.

In einigen Arbeiten wurden bereits Ansätze für die Verwendung von ML-Modellen für die Vorhersage des LTE-Durchsatzes untersucht. In [1] wird ein Modell zur Vorhersage des Download-Netzwerk-Durchsatzes vorgeschlagen. Hier wird eine lineare Regression verwendet, die auf der Sammlung von 130000 Client-Messungen, jeweils mit einem eigenen Software-Client, basiert.

In [2] wird ein ähnlicher Ansatz verfolgt, jedoch werden die im Modell verwendeten Features noch um Informationen aus den RAN-Systemen erweitert und der Vorhersage ein Random-Forest-Modell zu Grunde gelegt.

In [3] wird ein Framework namens "LinkForecast" vorgeschlagen, das den Durchsatz in Echtzeit vorhersagen soll. Auch hier wurde ein Random-Forest-Regressions-Modell verwendet, welches Features wie RSRP, RSRQ, CQI, BLER und Handover-Events verwendet.

Mehrere wissenschaftliche Arbeiten untersuchen welche Faktoren den Durchsatz in LTE-Netzwerken beeinflussen [5] [6] [7],

Der Erfindung liegt daher die Aufgabe zugrunde, ein Verfahren und System zur Vorhersage von Netzwerk Durchsätzen für ein Nutzerendgerät für vorbestimmte Geo-Koordinaten und einen vorbestimmten Zeitpunkt bereitzustellen.

Die voranstehende Aufgabe wird durch den Gegenstand der unabhängigen Patentansprüche gelöst. Die abhängigen Patentansprüche beziehen sich auf weitere Aspekte der Erfindung.

Der Erfindungsgegenstand ist durch die Patentansprüche definiert.

Der erfindungsgemäße Gegenstand betrifft ferner ein Computerprogramm, umfassend Befehle, die bei der Ausführung des Programms durch einen Computer diesen veranlassen, das Verfahren nach einem der Ansprüche 1-4 auszuführen.

**Kurze Beschreibung der Zeichnungen**

In den Zeichnungen zeigt:

Fig. 1 ein Blockdiagramm eines Verfahrens zur theoretischen Berechnung einer Vorhersage von Netzwerk-Durchsätzen an einer Geolokation, und

Fig. 2 ein Blockdiagramm des Verfahrens zum Bilden von Trainingsdatensätzen, welches beispielhaft beschrieben wird aber nicht Teil der vorliegenden Erfindung ist.

**Detaillierte Beschreibung der Zeichnungen**

Im Folgenden wird die Erfindung anhand mehrerer Ausführungsformen und Figuren erläutert. Dabei werden Merkmale jedoch nur dann im Detail beschrieben, wenn sie zum ersten Mal genannt werden. Gleiche Bezugszeichen beziehen sich auf gleiche Merkmale. Aus Gründen der Übersichtlichkeit wird auf Wiederholungen gleicher Beschreibungsteile verzichtet.

Eine Schätzung des von Download-, DL, und Upload-, UL,- Netzwerk-Durchsätzen in einem Telekommunikationsnetzwerk, vorzugsweise einem LTE-Netzwerk, basiert auf zwei Komponenten.

Die erste Komponente wird auch als Zell-Kontext bezeichnet und basiert auf Statistiken und Charakteristika einer Zelle des Telekommunikationsnetzwerkes. Es handelt sich dabei beispielsweise um Informationen wie die Anzahl der aktiven Nutzer in der Zelle, den Anteil der belegten Ressourcen-Blöcke in Prozent oder Infrastruktur-Angaben über die Zelle, wie beispielsweise die Höhe des Zellturms. Auch die Information, in welchem Frequenzband, bzw. in welchen Frequenzbändern, die Zelle funkt, gehören zum Zell-Kontext.

Der Zell-Kontext beeinflusst die Berechnung des Durchsatzes für alle geographischen Gebiete, die von der Zelle abgedeckt werden und für alle Nutzer in dieser Zelle. Hier und in der nachfolgenden Beschreibung ist ein geographisches Gebiet als ein Set an Geolokationen definiert, welche durch ihre Geo-Koordinaten beschrieben werden.

Die zweite Komponente wird auch als Nutzer-Kontext bezeichnet. Der Nutzer-Kontext hängt einerseits von den Radiofrequenz-Bedingungen ab, welche ein bestimmter Nutzer an einer bestimmten Geolokation erfährt, und andererseits von den Geräte-Ressourcen des Nutzers, d.h. dem Nutzerendgerät, UE, bzw. der LTE-Kategorie des UE. Informationen wie der RSRP- oder RSRQ-Wert an einer bestimmten Geolokation zu einer bestimmten Zeit oder auch die LTE-Kategorie des Nutzer-Endgerätes gehören zum Nutzer-Kontext. Der Nutzer-Kontext beeinflusst die Berechnung des Netzwerk-Durchsatzes nur für einen bestimmten Nutzer, der sich einer bestimmten Geolokation aufhält.

Die Nutzung der Ressourcen-Blöcke ist eine Metrik, die nicht direkt vom OSS bereitgestellt wird. Jede Zelle dokumentiert die Prozentzahl der genutzten Ressourcenblöcke, PRB, in einem bestimmten Zeitraum, vorzugsweise 30 Minuten. Die verfügbare Anzahl an Ressourcenblöcken variiert entsprechend der verfügbaren Bandbreite pro Frequenzband. Die freien Ressourcenblöcke werden wie folgt berechnet:

$$(1\text{-}PRB) * (Anzahl\ der\ Ressourcenblöcke\ per\ Hz) * (Bandbreite)$$

Analog wird die Anzahl der Ressourcenblöcke ist nach Upload und Download getrennt berechnet, diese sind im Zell-Kontext die wichtigsten Parameter für die theoretische Berechnung des Netzwerk-Durchsatzes.

Die Signal-to-Noise-Ratio, SNR, kann mit bekanntem RSRP wie folgt berechnet werden:

$$SNR = RSRP\ (dBm) - Noise\ Power\ in\ 15KHz$$

Die Noise power in 15KHz ist ungefähr -125,2 dBm. Deshalb kann ein SNR-Verhältnis vom RSRP definiert werden, das für die Schätzung des CQI genutzt werden kann.

Der CQI ist ein weiterer wichtiger Parameter, da er die Bit-Raten-Effizient definiert, die pro Ressourcen-Block erreicht werden kann. Die CQI-Schätzung hängt wiederum vom Übertragungs-Modus ab, der zwischen dem UE und dem eNodeB verwendet wird und wird außerdem von den Device-Kategorie-Spezifikationen beeinflusst, beispielsweise MIMO2x2, MIMO4x4, usw..

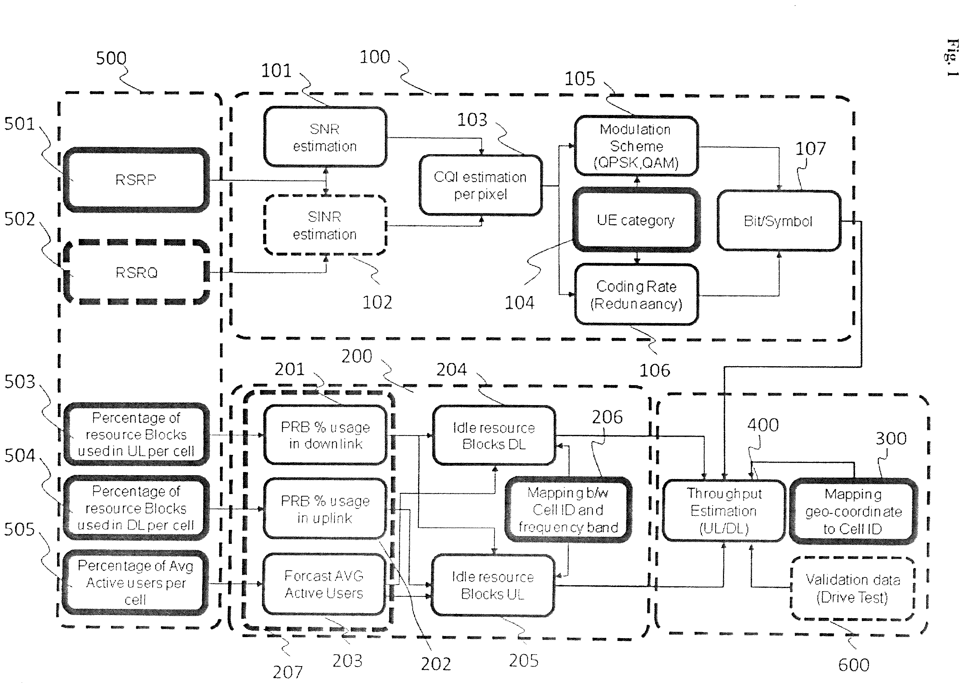

Figur 1 zeigt ein Blockdiagramm des Verfahrens zur Berechnung Vorhersage von Netzwerk-Durchsätzen. Für eine bestimmte Geolokation $geo_i$ ($lat_i$, $lon_i$) berechnet sich der theoretische Netzwerk-Durchsatz wie folgt, jeweils geschieht dies für jede Frequenz unabhängig:

Daten aus verschiedenen Datenquellen 500 werden genutzt um die Features des Nutzer-Kontext 100 und des Zell-Kontext 200 zu bestimmen. Anschließend wir aus dem Nutzer-Kontext 100 und dem Zell-Kontext 200 der Netzwerk-Durchsatz vorhergesagt 400.

In einer Ausführungsform weisen die Datenquellen 500 auf RSRP 501 und vorzugsweise RSRQ 502 Daten; PRB für Download pro Zelle 503; PRB für Upload pro Zelle 504; und Prozentsatz der durchschnittlich aktiven Nutzer 505. Ferner werden bevorzugt folgende Daten als Eingabe verarbeitet: ein Mapping zwischen Zell ID und Frequenzband 206; die UE Kategorie 104; sowie ein Mapping zwischen Geo-Koordinaten und Zell ID 300.

In einer Ausführungsform werden zur Bestimmung des Nutzer-Kontexts 100 vorzugsweise eine oder mehrere folgende Berechnungen durchgeführt: Eine Abschätzung des SNR 101; vorzugsweise eine Abschätzung des SINR 102; eine CQI Abschätzung 103, alternative oder ergänzend basierend auf dem SNR und/oder auf dem SINR; eine Bestimmung des Modulation Scheme 105, d.h. QPSK, QAM; eine Abschätzung der Kodierungsrate 106 , d.h. der Redundancy; und eine Bit/Symbol Rate 107.

In einer Ausführungsform werden zur Bestimmung des Zell-Kontexts 200 vorzugsweise eine oder mehrere der folgenden Berechnungen durchgeführt: Bestimmung der Zellstatistiken 207, die vorzugsweise aufweisen: eine Abschätzung des PRB % für den Downlink 201, eine Abschätzung der PRB % für den Uplink 202 und eine Vorhersage für eine durchschnittliche Anzahl an Nutzern 203; eine Abschätzung der ungenutzten Ressourcenblöcke im Download 204; und eine Abschätzung der ungenutzten Resourcenblöcke im Upload 205.

In einer Ausführungsform werden zur Bestimmung der Bit/Symbol pro Pixel und Band Rate vorzugsweise eine Vorhersage des DL-/UL- Netzwerk-Durchsatz 400, basierend auf dem Nutzer-Kontext 100 und dem Zell-Kontext 200, und alternativ oder ergänzend auf Validationsdaten 600, bevorzugt drive test Daten, durchgeführt.

In einer Ausführungsform erfolgt eine Bestimmung der Nutzer-Kontext Daten 100 aus:

i) RSRP und Frequenz für $geo_i$ als Ausgangspunkt;

ii) Schätzen des SNR durch Subtraktion von -125.2dBm des RSRP in dBm;

iii) Nachschlagen des betreffenden CQI basierend auf dem SNR, vorzugsweise unter Annahme eines bestimmten Übertragungsmodus; und

iv) Nachschlagen der betreffenden Bitrateneffizienz per RB basierend auf dem CQI.

In einer Ausführungsform erfolgt eine Bestimmung der Zell-Kontext Daten 300 aus:

v) Nachschlagen der dominanten Zell-ID an $geo_i$ und der betreffenden Frequenz;

vi) Nachschlagen der verfügbaren Anzahl an Ressourcenblöcken für die betreffende Frequenz;

vii) Vorhersagen der Idle-Ressourcenblöcke basierend auf den gesamten Ressourcenblöcken pro Frequenz und dem Anteil genutzter Ressourcenblöcke; und

viii) Vorhersagen des Netzwerk Durchsatzes 400 für eine bestimmte Frequenz durch das Multiplizieren der Ergebnisse aus Schritt iv) und vii)

Nachdem der Netzwerk-Durchsatz pro Frequenz errechnet wurde, kann eine Gesamt-Vorhersage durch die Aggregation der Vorhersagen per Band abgegeben werden, vorzugsweise durch eine Durchschnittsbildung.

Um den DL-/UL- Netzwerk-Durchsatz an einer bestimmten Geolokation zu berechnen, werden die Anzahl der Ressourcen-Elemente, die der eNodeB der Zelle für einen neu verbundenen Nutzer zu einer bestimmten Zeit allokiert hat und die Bitraten-Effizient pro Ressourcen-Block an diesem Punkt benötigt. Diese Information, welche Bestandteil des Zell-Kontextes 200 sind, beziehen sich allerdings auf die durchschnittliche Anzahl der freien Ressourcenblöcke/Elemente in einer Zeitspanne von je 30 Minuten.

Dabei wird über eine bestimmte Zeitspanne ein Durchschnitt gebildet. Allerdings kann selbst, wenn die Anzahl der freien Ressourcenblöcke /-elemente bekannt ist, ohne die Scheduling-Technik des eNodeB zu berücksichtigen, nicht sicher bestimmen werden, wie viele der ungenutzen Ressourcenblöcke dem neuen Nutzer zugeteilt werden. Ferner kann sich ein UE sich auch mit einer Zelle verbinden, die unterschiedlich zu der an der Geolokation dominanten Zelle ist.

Die RSRP und RSRQ Werte sind Messungen, die in einem Gebiet von etwa 120 Quadratmeter über eine längere Zeitspanne gebildet wurden. So können Messwerte, die von Indoor- und Outdoor-Messungen stammen, nicht mehr unterschieden werden.

Außerdem wird für Werte aus unterschiedlichen Zellen, d.h. nicht nur der dominanten Zelle, der Durchschnitt gebildet. Desweiteren resultieren die Kombinationen der Device-Kategorien und Transmission-Modes in unterschiedlichsten Bitraten-Effizienzen pro Ressourcenelement für jede Geolokation.

Die oben diskutierten ML-Ansätze aus dem Stand der Technik beruhen darauf, dass kurz vor dem Zeitpunkt der Vorhersage eine Messung durchgeführt werden muss, also in Echtzeit zur Verfügung stehen muss. Die Methoden sind somit nicht für die Vorhersage von Netzwerk-Durchsätzen, d.h. LTE Durchsätze für Down- und Uplink, entlang längerer Routen geeignet.

Die Methoden aus dem Stand der Technik verwenden nur Daten, die auf einem UE selbst erhoben werden. Netzseitige Daten, wie beispielsweise die durchschnittliche Auslastung des Netzes an einer bestimmten Geolokation zu einer bestimmten Zeit oder zu Inter- und Intra-Handovern werden nicht verwendet.

Gemäß den erfindungsgemäßen Verfahren und Systemen können weitere Datenquellen wie Wetterdaten oder Alarmdaten über Ausfälle von Zelltürmen einfach in das Modell integriert werden.

Ferner ergibt sich der Vorteil, dass Regelmäßigkeiten in den Daten wie wiederkehrende Events in der Vorhersage modelliert werden können.

Ferner ergibt sich der Vorteil, dass erfindungsgemäß keine Software auf dem Endgerät benötigt wird. Nachdem das erfindungsgemäße Modell einmalig mit einer Kombination aus Client-Messungen und Netzdaten trainiert wurde, lässt es sich einfach skalieren.

Eine Kern-Idee hinter der vorliegenden Erfindung ist es, basierend auf historischen Client-Messungen durch die Kombination des Zell- und Nutzer-Kontexts ein ML-Modell zu trainieren. Das ML-Modell liefert im Anschluss flächendeckende Langzeit-Vorhersagen für den zu erwartenden DL- und UL-Netzwerk-Durchsatz auf einer bestimmten Route, wobei die Route durch Zeit- und Ort-Paare bestimmt ist.

Im Gegensatz zu bekannten Lösungen, beruht die vorliegende Erfindung auf einer Verwendung von historischen Client-Messungen, die also nicht in Echtzeit erhoben werden müssen. Als Basis für die erfindungsgemäßen Trainingsdaten dienen zahlreiche Client-Messungen, die vorzugsweise mit Hilfe von mobilen Messvorrichtungen durchgeführt wurden. In einer bevorzugten Ausführungsform n sind die Messvorrichtungen in Fahrzeugen, vorzugsweise, Taxen installiert.

Neben der jeweiligen Durchsätze für Down- und Uplink liefern die Messvorrichtungen auch Informationen zu Ort und Zeitpunkt der Messung, der Kategorie des verwendeten UE und der Zellnummer, mit der das Endgerät verbunden war.

Ausgehend von einer Messung werden dann aus den verfügbaren OSS-Daten sämtliche Zell- und Nutzerkontext-Informationen, die zum Zeitpunkt der Messung am betreffenden Ort gesammelt wurden, ein Trainingsdatensatz für das ML-Modell gebildet.

In einer bevorzugten Ausführungsform ergeben sich für 100.000 Messungen somit 100.000 Trainingsdatensätze, von denen in der Praxis aber ca. 20% als Testdatensätze verwendet werden und somit nicht mit in das Training des Modells mit einfließen.

In einer bevorzugten Ausführungsform werden von der mobilen Messvorrichtung die folgenden Daten erfasst: die gemessenen Durchsätze für Down- und Uplink, d.h. die Netzwerk-Durchsätze; die Geo-Koordinaten, an der die Messung durchgeführt wurde; der Zeitpunkt, zu dem die Messung durchgeführt wurde; die ID der Zelle, mit der die Messvorrichtung verbunden war; die LTE-Kategorie der Messvorrichtung; und die Geschwindigkeit, mit der sich die Messvorrichtung bei der Messung bewegt hat.

Ferner werden Zell-Infrastruktur-Daten erfasst. Diese Daten gehören zum Zell-Kontext, und gelten somit für alle Nutzer der Zelle und sind sowohl orts- als auch zeitunabhängig. Es handelt sich hierbei um fixe Parameter, wie beispielsweise die Höhe des Zellturms und andere.

Ferner werden Zellnutzungsdaten erfasst. Ein an die Zelle angeschlossenes Überwachungssystem liefert weitere wichtige Informationen zum Zell-Kontext, die allerdings im Gegensatz zu den Infrastruktur-Daten zeitabhängig sind. Das System aggregiert folgende Informationen auf 30-minütige Intervalle: Anzahl der durchschnittlich aktiven Nutzer in der Zelle; Genutzter Anteil an Ressourcen-Blöcken für DL/UL und Signaldaten.

Die RSRP- und RSRQ-Werte unterliegen einer ständigen Änderung, werden jedoch maßgeblich von den Umgebungsbedingungen am betreffenden Ort beeinflusst, weshalb gemäß der vorliegenden Erfindung mit Durchschnitts-Werten gearbeitet wird. Die Werte können vom OSS ermittelt werden oder von einem Drittanbieter, wie beispielsweise von Google, Facebook oder aus Verkehrspotentialkarten stammen.

Wenn ein Gerät einen Übergang (Handover) zwischen verschiedenen LTE-Zellen in unterschiedlichen Bändern durchläuft, spricht man von einem Intrafrequenz-Handover. Bei einem Übergang zwischen unterschiedlichen Zellen des gleichen Frequenzbandes dagegen von einem Interfrequenz-Handover. Die Anzahl dieser Events pro Geo-Raster-Einheit ist eine wichtige Metrik. Das gleiche gilt für die Anzahl von Anruf-Verbindungsabbrüchen pro Raster-Einheit.

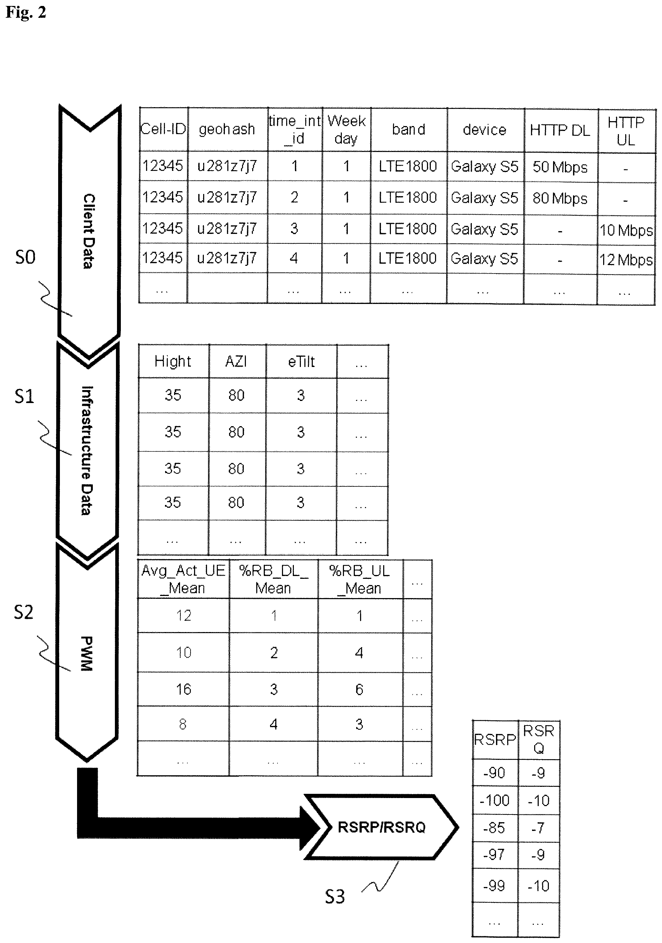

Figur 2 zeigt ein in Blockdiagramm des Verfahrens zum Bilden von Trainingsdatensätzen nach einer Ausführungsform der Erfindung. Ausgangspunkt bildet jeweils eine Messung S0 der Messvorrichtung.

Da in dieser Messung S0 erfindungsgemäß die Zell-ID erfasst wird, der eine eindeutige Zuordnung der Messung S0 zu einer Zelle erlaubt, werden in einem ersten Schritt S1 die zu der entsprechenden Zelle gehörenden Infrastruktur-Parameter, wie beispielsweise die Höhe des Funkturms, geladen und als ML-Features verwendet.

In einem zweiten Schritt S2 wird die Zell-ID in Kombination mit dem Zeitpunkt der Messung dazu genutzt, die Zellnutzungs-Informationen zu laden, also beispielsweise wie viele Nutzer sich zum Zeitpunkt der Messung durchschnittlich in der Zelle aufgehalten haben.

Als besonders vorteilhaft ist auch die Erfassung von Metriken wie der Standardabweichung der Zellnutzungsdaten zu den betreffenden Zeitintervallen. In einer bevorzugten Ausführungsform fließen diese ebenfalls in die Bildung der Trainingsdatensätze ein.

Als letzter Schritt S3 werden noch die ortsbezogenen RSRP- und RSRQ-Werte mit in den Datensatz geschrieben, die wie oben beschrieben aus unterschiedlichen Quellen stammen können.

Die in der Figur 2 gezeigten Daten sind auch in den Tabellen 2 bis 5 aufgelistet. Tabelle 2 zeigt die Daten in Schritt S0; Tabelle 3 zeigt die zusätzlichen Daten in Schritt S1, Tabelle 4 zeigt die zusätzlichen Daten in Schritt S2; und Tabelle 5 zeigt due zusätzlichen Daten in Schritt S4. In einer Ausführungsform werden die Trainingsdatensätze aus einer Kombination, bevorzugt einer Verkettung, der Daten aus den Tabellen 2 bis 5 gebildet.

Die Erfinder haben sämtliche bisher vorgestellten Features, die durch die vorgestellten Datenquellen bereitgestellt wurden, auf ihren Einflusses auf die DL-/UL-Netzwerk-Durchsatz-Vorhersage analysiert. Tabelle 1 listet die als am wichtigsten identifizierten Features, welche in einer besonders bevorzugten Ausführungsform genutzt werden, auf.

Das Vorhersagemodell selbst wurde als ein Problem des überwachten maschinellen Lernens formuliert, mit den DL- und/oder UL-Netzwerk-Durchsätzen als jeweilige Zielvariable. Da der Netzwerk-Durchsatz ein kontinuierlicher Wert ist wird das Vorhersagemodell in einer besonders bevorzugten Ausführungsform mit Hilfe von Regressionsmethoden gebildet.

Ferner wird besonders bevorzugt für DL- und/oder UL-Netzwerk-Durchsätzen jeweils ein separates Modell trainiert.

Mit Hilfe der Trainingsdatensätze können verschiedene Modelle trainiert und evaluiert werden, Ausführungsformen der Erfindung nutzen lineare Modelle, Ensemble-Modelle und/oder neuronale Netze.

In einer Ausführungsform der Erfindung werden für die Vorhersage nur der gewünschte Zeitpunkt, die Geokoordinaten und die LTE-Kategorie des Endgerätes als Eingabe verwendet. Weiterhin wird erfindungsgemäß das LTE-Band verwendet, mit dem das Endgerät zu dem Zeitpunkt verbunden sein wird, der mit der Vorhersage abgedeckt wird.

Erfindungsgemäß kann das LTE-Band wie folgt bestimmt werden: Durch Ermitteln des an der betreffenden Geolokation in der Vergangenheit am häufigsten genutzte Bandes; durch Ermitteln aller an der betreffenden Geolokation verfügbaren Bänder mit anschließender Bildung des Durchschnitts, d.h. die Bestimmung des LTE-Bandes erfolgt lediglich auf dem "Dominant Cell" Datensatz, und/oder durch Ermitteln des Bandes mit der höchsten Frequenz, welches an der betreffenden Geolokation verfügbar ist, da für dieses der höchste Durchsatz erwartet wird.

In einer bevorzugten Ausführungsform werden dem ML-Modell, vorzugsweise über eine vorgeschaltete API, ein Satz aus Geolokationen und Zeitstempeln übergeben, für die die Vorhersagen generiert werden sollen. Eine Ausführungsform betrifft die Route eines Fahrzeugs, die ein Fahrer in den kommenden Minuten/Stunden zu fahren gedenkt. Ferner wird erfindungsgemäß die LTE-Kategories des Gerätes, für das die Vorhersage erstellt werden soll angegeben.

Basierend auf den übergebenen Daten werden erfindungsgemäß folgende Daten aus einer der entsprechenden Datenquellen, vorzugsweise Datenbank, geladen:

1) Die Zell-ID, der Zelle mit der sich das UE aller Wahrscheinlichkeit nach verbinden wird,
2) Die der Zelle entsprechenden Infrastruktur-Daten
3) Die der Zelle entsprechenden Zell-Nutzungsdaten

Da keine Informationen vorliegen, wie viele Nutzer sich in der Zelle zu dem Zeitpunkt aufhalten werden, wird in einer bevorzugten Ausführungsform mit Metriken wie dem Durchschnitt und der Standardabweichung für das betreffende Zeitintervall gearbeitet.

4) Die durchschnittlich gemessenen RSRP- und RSRQ-Werte für die angefragten Geolokationen

Anschließend werden alle geladenen Informationen in das zuvor mit den Trainingsdatensätzen trainierte ML-Modell geladen, das nun in der Lage ist eine bzw. mehrere Vorhersagen bereitzustellen.

Die Erfindung wurde anhand mehrerer Ausführungsformen beschrieben. Die Ausführungsformen begrenzen jedoch den Erfindungsgegenstand nicht. Vielmehr ist es dem Fachmann möglich Merkmale verschiedener Ausführungsformen miteinander zu kombinieren.

Tabelle 1: Auflistung der wichtigsten Einflussfaktoren auf die Vorhersage des Netzwerk-Durchsatzes

| Feature | Beschreibung |
| --- | --- |
| week_day | Wochentag, z.B. 1 für Montag, 2 für Dienstag, ... |
| time_interval_id | Zeitintervall mit 30 Minuten, 1 korrespondiert mit 00:00, 2 mit 00:30, ... |
| Band | Das LTE-Band. Verfügbare Bänder: LTE2600, LTE1800, LTE900 und LTE800 |
| ue_category | LTE-Kategorie des Nutzer-Devices. Z.B. 4, 6, 9, 16, ... |
| Avg_Act_UE_std | Standardabweichung der Anzahl der verbundenen Nutzer für einen bestimmten Wochentag/bestimmtes Zeitintervall (30 Minuten) |
| Avg_Act_UE_mean | Durchschnittliche Anzahl der verbundenen Nutzer für einen bestimmten Wochentag und Zeitintervall (30 Minuten) |
| DL_PRB_Util_std | Standardabweichung der prozentualen Downlink-Blöcke für einen bestimmten Wochentag und ein bestimmtes Zeitintervall (30 min) |
| DL_PRB_Util_mean | Durchschnitt der prozentualen Downlink-Blöcke für einen bestimmten Wochentag und ein bestimmtes Zeitintervall (30 min) |
| UL_PRB_Util_std | Standardabweichung der prozentualen Uplink-Blöcke für einen bestimmten Wochentag und ein bestimmtes Zeitintervall (30 min) |
| UL_PRB_Util_mean | Durchschnitt der prozentualen Uplink-Blöcke für einen bestimmten Wochentag und ein bestimmtes Zeitintervall (30 min) |
| RSRP | RSRP-Wert |
| RSRQ | RSRQ-Wert |
| cable_loss | Cable loss des Zellturms |
| Height | Höhe der Zellturm-Antenne |
| AZI | Azimuth der Zellturm-Antenne |
| eTilt | Elektrische Neigung der Zellturm-Antenne |

Tabelle 2: Daten aus Schritt S0

| Cell-ID | geohash | time_int_id | Week day | band | device | HTTP DL | HTTP UL |
|---------|---------|-------------|----------|------|--------|---------|---------|
| 12345 | u281z7j7 | 1 | 1 | LTE1800 | Galaxy S5 | 50 Mbps | - |
| 12345 | u281z7j7 | 2 | 1 | LTE1800 | Galaxy S5 | 80 Mbps | - |
| 12345 | u281z7j7 | 3 | 1 | LTE1800 | Galaxy S5 | - | 10 Mbps |
| 12345 | u281z7j7 | 4 | 1 | LTE1800 | Galaxy S5 | - | 12 Mbps |
| ... | | ... | ... | ... | ... | | ... |

Tabelle 3: Daten aus Schritt S1

| Hight | AZI | eTilt | ... |
|-------|-----|-------|-----|
| 35 | 80 | 3 | ... |
| 35 | 80 | 3 | ... |
| 35 | 80 | 3 | ... |
| 35 | 80 | 3 | ... |
| ... | ... | ... | ... |

Tabelle 4: Daten aus Schritt S2

| Avg_Act_UE_Mean | %RB_DL_ Mean | %RB_UL _Mean | ... |
|-----------------|--------------|--------------|-----|
| 12 | 1 | 1 | ... |
| 10 | 2 | 4 | ... |
| 16 | 3 | 6 | ... |
| 8 | 4 | 3 | ... |
| ... | ... | ... | ... |

Tabelle 5: Daten aus SchrittS3

| RSRP | RSRQ |
|------|------|
| -90 | -9 |
| -100 | -10 |
| -85 | -7 |
| -97 | -9 |
| -99 | -10 |
| ... | ... |

**Referenzen**

[1] J. Cainey, B. Gill, S. Johnston, J. Robinson und S. Westwood, "Modeling download throughput of LTE networks," in IEEE Conference on Local Computer Networks Workshops, 2014.
[2] A. Samba, Y. Busnel, A. Blanc, P. Dooze und G. Simon, "Instantaneous throughput prediction in cellular networks:

Which information is needed?," in IFIPIIEEE Symposium on Integrated Network and Service Management, 2017.

[3] A. Elnashar und M. A. El-Saidny, "Looking at LTE in practice: A performance analysis of the LTE system based on field test results," IEEE Vehicular Technology Magazine 8(3), pp. 81-92, 2013.

[4] F. Jomrich, A. Herzberger, T. Meuser, B. Richerzhagen, R. Steinmetz und C. Wille, "Cellular Bandwidth prediction for Highly Automated Driving - Evaluation of Machine Learning Approaches based on Real-World Data," in VEHITS, 2018.

[5] V. Sevindik, J. Wang, O. Bayat und J. Weitzen, "Performance evaluation of a real long term evolution (LTE) network," in IEEE Conference on Local Computer Networks Workshops, 2012.

[6] S. Sonntag, L. Schulte und J. Manner, "Mobile network measurements - It's not all about signa strength," in IEEE Conference on Wireless Communications and Networking, 2013.

[7] C. Yue, R. Jin, K. Suh, Y. Qin, B. Wang und W. Wei, "Linkforecast: Cellular link bandwidth prediction in LTE networks," in IEEE Transactions on Mobile Computing, 2018.

**Abkürzungen**

| API | Application Programming Interface |
| PRB | Prozentzahl der genutzten Ressourcenblöcke |
| BLER | Block Error Ratio |
| CQI | Channel Quality Indicator |
| DL | Download |
| LTE | Long Term Evolution |
| MIMO | Multiple Input Multiple Output |
| ML | Machine Learning |
| OSS | Operating Support System |
| RSRP | Reference Signal Received Power |
| RSRQ | Reference Signal Received Quality |
| RAN | Radio Access Network |
| SNR | Signal-to-Noise-Ratio |
| UE | User Equipment, Nutzerendgerät |
| UL | Upload |
| eNodeB | E-UTRAN Node B |
| QPSK | Quadraturphasenumtastung oder Vierphasen-Modulation |
| QAM | Quadraturamplitudenmodulation |

**Patentansprüche**

1. Verfahren zur Vorhersage von Netzwerk-Durchsätzen in einem Telekommunikationsnetzwerk für ein Nutzerendgerät, UE, welches mit dem Telekommunikationsnetzwerk verbunden sein wird für vorbestimmte zukünftige Geo-Koordinaten und einen vorbestimmten zukünftigen Zeitpunkt, an dem sich das UE an den vorbestimmten zukünftigen Geo-Koordinaten befinden wird, wobei das Verfahren folgende Schritte aufweist:

    A) Empfangen eines Nutzer-Datensatzes, der Information zu dem vorbestimmten zukünftigen Zeitpunkt, den vorbestimmten zukünftigen Geo-Koordinaten und einer LTE-Kategorie des UE aufweist,
    B) Bestimmen einer LTE-Band Vorhersage für ein LTE-Band, mit dem das UE zu dem vorbestimmten zukünftigen Zeitpunkt verbunden sein wird, und
    C) Berechnen einer Vorhersage von Download-, DL-, und Upload-, UL-, Netzwerk-Durchsätzen zwischen Telekommunikationsnetzwerk und Nutzerendgerät, in einem Machine Learning, ML, System, welches anhand historischer Datensätze trainiert wurde, basierend auf dem Nutzer-Datensatz und der LTE-Band Vorhersage; wobei die Vorhersage für ein LTE-Band im Schritt B), mit dem das UE zu dem vorbestimmten zukünftigen Zeitpunkt verbunden sein wird, bestimmt wird aus

        a) einem ersten Datensatz, der die an den vorbestimmten zukünftigen Geo-Koordinaten verfügbaren Bänder betrifft, wobei anschließend ein Durchschnitt gebildet wird, und/oder
        b) einem zweiten Datensatz, der das an den vorbestimmten zukünftigen Geo-Koordinaten verfügbare Band mit der höchsten Frequenz betrifft.

**2.** Verfahren nach Anspruch 1, wobei das Berechnen im Schritt C) folgende Schritte umfasst:

C1) Bestimmen einer Zell-ID einer bestimmten Netzwerkzelle, mit der das UE am wahrscheinlichsten zu dem vorbestimmten Zeitpunkt verbunden sein wird,
C2) Bestimmen von Infrastruktur-Daten der bestimmten Netzwerkzelle aus einer ersten Datenbank;
C3) Bestimmen von Zell-Nutzungsdaten der bestimmten Netzwerkzelle aus einer zweiten Datenbank; und
C4) Bestimmen von durchschnittlich gemessenen Signaldaten für die vorbestimmten Geo-Koordinaten aus einer dritten Datenbank.

**3.** Verfahren nach Anspruch 1 oder 2, wobei die Vorhersage für ein LTE-Band im Schritt B), mit dem das UE zu dem vorbestimmten Zeitpunkt verbunden sein wird, ferner bestimmt wird aus
einem dritten Datensatz, der das an den vorbestimmten Geo-Koordinaten in der Vergangenheit am häufigsten genutzte Band betrifft.

**4.** Verfahren nach einem der Ansprüche 1 bis 3,
wobei
eine Route durch mindestens zwei Paare von vorbestimmten zukünftigen Geo-Koordinaten und zugehörigen vorbestimmten zukünftigen Zeitpunkten definiert wird und für jede der Geo-Koordinaten und Zeitpunkte eine Vorhersage mit einem Verfahren nach einem der Ansprüche 1 bis 9 durchgeführt wird.

**5.** System zur Vorhersage von Netzwerk-Durchsätzen in einem Telekommunikationsnetzwerk für ein Nutzerendgerät, UE, welches mit dem Telekommunikationsnetzwerk verbunden sein wird, für vorbestimmte zukünftige Geo-Koordinaten und einen vorbestimmten zukünftigen Zeitpunkt an dem sich das UE an den vorbestimmten zukünftigen Geo-Koordinaten befinden wird, wobei das System aufweist:

A) Eine Empfangsvorrichtung, die konfiguriert ist, einen Datensatz der Information zu dem vorbestimmten zukünftigen Zeitpunkt, den vorbestimmten zukünftigen Geo-Koordinaten und einer LTE-Kategorie des UE aufweist, zu empfangen;
B) Eine erste Berechnungseinheit, die konfiguriert ist, eine LTE-Band Vorhersage für ein LTE-Band, mit dem das Endgerät zu dem vorbestimmten zukünftigen Zeitpunkt verbunden sein wird, zu berechnen; und
C) Eine zweite Berechnungseinheit, die konfiguriert ist, eine Vorhersage von Download-, DL-, und Upload-, UL-, Netzwerk-Durchsätzen zwischen Telekommunikationsnetzwerk und Nutzerendgerät basierend auf dem Datensatz und der LTE-Band Vorhersage zu berechnen;

wobei die zweite Berechnungseinheit ein Machine Learning, ML, System aufweist, das anhand historischer Datensätze trainiert wurde;
wobei die Vorhersage für ein LTE-Band, mit dem das UE zu dem vorbestimmten zukünftigen Zeitpunkt verbunden sein wird, berechnet wird aus

a) einem ersten Datensatz, der die an den vorbestimmten zukünftigen Geo-Koordinaten verfügbaren Bänder betrifft, wobei anschließend ein Durchschnitt gebildet wird, und/oder
b) einem zweiten Datensatz, der das an den vorbestimmten zukünftigen Geo-Koordinaten verfügbare Band mit der höchsten Frequenz betrifft.

**6.** Computerprogramm, umfassend Befehle, die bei der Ausführung des Programms durch einen Computer diesen veranlassen, das Verfahren nach einem der Ansprüche 1 bis 4 auszuführen.

**Claims**

**1.** A method of predicting network throughputs in a telecommunication network for a user terminal device, UE, to be connected to the telecommunication network for predetermined future geo-coordinates and a predetermined future time at which the UE will be located at the predetermined future geo-coordinates, the method comprising the steps of:

A) receiving a user data set comprising information about the predetermined future time, the predetermined future geo-coordinates and an LTE category of the UE;
B) determining an LTE band prediction for an LTE band to which the UE will be connected at the predetermined future time; and

C) calculating a prediction of download, DL, and upload, UL, network throughputs between the telecommunication network and the user terminal device, in a machine learning, ML, system trained on historical data sets, based on the user data set and the LTE band prediction;
wherein the prediction for an LTE band in step B) to which the UE will be connected at the predetermined future time is determined from

a) a first data set relating to the bands available at the predetermined future geo-coordinates, wherein an average is subsequently formed; and/or
b) a second data set relating to the band with the highest frequency available at the predetermined future geo-coordinates.

2. The method according to claim 1, wherein the calculation in step C) comprises the following steps:

C1) determining a cell ID of a particular network cell to which the UE will most likely be connected at the predetermined time;
C2) determining infrastructure data of the determined network cell from a first database;
C3) determining cell utilization data of the determined network cell from a second database; and
C4) determining average measured signal data for the predetermined geo-coordinates from a third database.

3. The method according to claim 1 or 2, wherein the prediction for an LTE band in step B) to which the UE will be connected at the predetermined time is further determined from a third data set relating to the most frequently used band at the predetermined geo-coordinates in the past.

4. The method according to any one of claims 1 to 3,
wherein
a route is defined by at least two pairs of predetermined future geo-coordinates and associated predetermined future time points, and a prediction is performed for each of the geo-coordinates and time points using a method according to any one of claims 1 to 9.

5. A system for predicting network throughputs in a telecommunication network for a user terminal device, UE, to be connected to the telecommunication network, for predetermined future geo-coordinates and a predetermined future time at which the UE will be located at the predetermined future geo-coordinates, the system comprising:

A) a receiving device configured to receive a data set of the information comprising the predetermined future time, the predetermined future geo-coordinates and an LTE category of the UE;
B) a first calculation unit configured to calculate an LTE band prediction for an LTE band to which the terminal device will be connected at the predetermined future time; and
C) a second calculation unit configured to calculate a prediction of download, DL, and upload, UL, network throughputs between the telecommunication network and the user terminal device based on the data set and the LTE band prediction;

wherein the second calculation unit comprises a machine learning, ML, system trained on historical data sets;
wherein the prediction for an LTE band to which the UE will be connected at the predetermined future time is calculated from

a) a first data set relating to the bands available at the predetermined future geo-coordinates, wherein an average is subsequently formed; and/or
b) a second data set relating to the band with the highest frequency available at the predetermined future geo-coordinates.

6. A computer program comprising instructions which, when the program is executed by a computer, cause the computer to execute the method according to any one of claims 1 to 4.

**Revendications**

1. Procédé de prévision des débits de réseau dans un réseau de télécommunication pour un terminal utilisateur, UE, qui sera connecté au réseau de télécommunication pour des coordonnées géographiques futures prédéterminées et un temps futur prédéterminé où l'UE se trouvera aux coordonnées géographiques futures prédéterminées, ledit procédé comprenant les étapes suivantes :

A) réception d'un ensemble de données d'utilisateur comprenant des informations sur le temps futur prédéterminé, les coordonnées géographiques futures prédéterminées et une catégorie LTE de l'UE ;
B) détermination d'une prévision de bande LTE pour une bande LTE à laquelle l'UE sera connecté au temps futur prédéterminé ; et
C) calcul d'une prévision des débits de réseau de téléchargement, DL, et de chargement, UL, entre le réseau de télécommunication et le terminal d'utilisateur, dans un système d'apprentissage automatique, ML, ayant été entraîné à partir d'ensembles de données historiques, sur la base de l'ensemble de données d'utilisateur et de la prévision de bande LTE ;

où lors de l'étape B), la prévision pour une bande LTE, à laquelle l'UE sera connecté au temps futur prédéterminé, est déterminée à partir

a) d'un premier ensemble de données concernant les bandes disponibles aux coordonnées géographiques futures prédéterminées, une moyenne étant ensuite calculée ; et/ou
b) d'un deuxième ensemble de données concernant la bande ayant la fréquence la plus élevée disponible aux coordonnées géographiques futures prédéterminées.

2. Procédé selon la revendication 1, où le calcul lors de l'étape C) comprend les étapes suivantes :

C1) détermination d'un identifiant de cellule d'une cellule de réseau spécifique à laquelle il est le plus probable que l'UE soit connecté au temps prédéterminé ;
C2) détermination des données d'infrastructure de la cellule de réseau spécifique à partir d'une première base de données ;
C3) détermination des données d'utilisation de cellule de la cellule de réseau déterminée à partir d'une deuxième base de données ; et
C4) détermination des données de signal mesurées en moyenne pour les coordonnées géographiques prédéterminées à partir d'une troisième base de données.

3. Procédé selon la revendication 1 ou la revendication 2, où lors de l'étape B), la prévision pour une bande LTE, à laquelle l'UE sera connecté au temps prédéterminé, est en outre déterminée à partir d'un troisième ensemble de données concernant la bande la plus fréquemment utilisée dans le passé aux coordonnées géographiques prédéterminées.

4. Procédé selon l'une des revendications 1 à 3, où un itinéraire est défini par au moins deux paires de coordonnées géographiques futures prédéterminées et des temps futurs prédéterminés associés et, pour chaque coordonnée géographique et chaque temps, une prévision est effectuée au moyen d'un procédé selon l'une des revendications 1 à 9.

5. Système de prévision des débits de réseau dans un réseau de télécommunication pour un terminal utilisateur, UE, qui sera connecté au réseau de télécommunication pour des coordonnées géographiques futures prédéterminées et un temps futur prédéterminé où l'UE se trouvera aux coordonnées géographiques futures prédéterminées, ledit système comprenant :

A) un dispositif de réception configuré pour recevoir un ensemble de données comprenant des informations sur le temps futur prédéterminé, les coordonnées géographiques futures prédéterminées et une catégorie LTE de l'UE ;
B) une première unité de calcul configurée pour calculer une prévision de bande LTE pour une bande LTE à laquelle l'UE sera connecté au temps futur prédéterminé ; et
C) une deuxième unité de calcul configurée pour calculer une prévision des débits de réseau de téléchargement, DL, et de chargement, UL, entre le réseau de télécommunication et le terminal d'utilisateur, sur la base de l'ensemble de données d'utilisateur et de la prévision de bande LTE ;
où la deuxième unité de calcul comprend un système d'apprentissage automatique, ML, ayant été entraîné à partir d'ensembles de données historiques ;
où la prévision pour une bande LTE à laquelle l'UE sera connecté au temps futur prédéterminé est calculée à partir

a) d'un premier ensemble de données concernant les bandes disponibles aux coordonnées géographiques futures prédéterminées, une moyenne étant ensuite calculée ; et/ou
b) d'un deuxième ensemble de données concernant la bande ayant la fréquence la plus élevée disponible aux coordonnées géographiques futures prédéterminées.

**6.** Programme informatique, comprenant des instructions qui, lorsque le programme est exécuté par un ordinateur, entraînent la mise en oeuvre par celui-ci du procédé selon l'une des revendications 1 à 4.

Fig. 1

**Fig. 2**

**S0** — Client Data

| Cell-ID | geohash | time_int_id | Week day | band | device | HTTP DL | HTTP UL |
|---|---|---|---|---|---|---|---|
| 12345 | u281z7j7 | 1 | 1 | LTE 1800 | Galaxy S5 | 50 Mbps | - |
| 12345 | u281z7j7 | 2 | 1 | LTE 1800 | Galaxy S5 | 80 Mbps | - |
| 12345 | u281z7j7 | 3 | 1 | LTE 1800 | Galaxy S5 | - | 10 Mbps |
| 12345 | u281z7j7 | 4 | 1 | LTE 1800 | Galaxy S5 | - | 12 Mbps |
| ... | | ... | ... | ... | ... | ... | ... |

**S1** — Infrastructure Data

| Hight | AZI | eTilt | ... |
|---|---|---|---|
| 35 | 80 | 3 | ... |
| 35 | 80 | 3 | ... |
| 35 | 80 | 3 | ... |
| 35 | 80 | 3 | ... |
| ... | ... | ... | ... |

**S2** — PWM

| Avg_Act_UE_Mean | %RB_DL_Mean | %RB_UL_Mean | ... |
|---|---|---|---|
| 12 | 1 | 1 | ... |
| 10 | 2 | 4 | ... |
| 16 | 3 | 6 | ... |
| 8 | 4 | 3 | ... |
| ... | ... | ... | ... |

**S3** — RSRP/RSRQ

| RSRP | RSRQ |
|---|---|
| -90 | -9 |
| -100 | -10 |
| -85 | -7 |
| -97 | -9 |
| -99 | -10 |
| ... | ... |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2188916 A1

**In der Beschreibung aufgeführte Nicht-Patentliteratur**

- **SAMBA et al.** Predicting file downloading time in cellular network: Large-Scale analysis of machine learning approaches. *Computer Networks,* 09. November 2018, vol. 145, 243-254
- **J. CAINEY ; B. GILL ; S. JOHNSTON ; J. ROBINSON ; S. WESTWOOD.** Modeling download throughput of LTE networks. *IEEE Conference on Local Computer Networks Workshops,* 2014
- **A. SAMBA ; Y. BUSNEL ; A. BLANC ; P. DOOZE ; G. SIMON.** Instantaneous throughput prediction in cellular networks: Which information is needed?. *IFIPIIEEE Symposium on Integrated Network and Service Management,* 2017
- **A. ELNASHAR ; M. A. EL-SAIDNY.** Looking at LTE in practice: A performance analysis of the LTE system based on field test results. *IEEE Vehicular Technology Magazine,* 2013, vol. 8 (3), 81-92
- **F. JOMRICH ; A. HERZBERGER ; T. MEUSER ; B. RICHERZHAGEN ; R. STEINMETZ ; C. WILLE.** Cellular Bandwidth prediction for Highly Automated Driving - Evaluation of Machine Learning Approaches based on Real-World Data. *VEHITS,* 2018
- **V. SEVINDIK ; J. WANG ; O. BAYAT ; J. WEITZEN.** Performance evaluation of a real long term evolution (LTE) network. *IEEE Conference on Local Computer Networks Workshops,* 2012
- **S. SONNTAG ; L. SCHULTE ; J. MANNER.** Mobile network measurements - It's not all about signa strength. *IEEE Conference on Wireless Communications and Networking,* 2013
- **C. YUE ; R. JIN ; K. SUH ; Y. QIN ; B. WANG ; W. WEI.** Linkforecast: Cellular link bandwidth prediction in LTE networks. *IEEE Transactions on Mobile Computing,* 2018